(19) Europäisches Patentamt
European Patent Office
Office européen des brevets

(11) EP 4 737 274 A1

(12) EUROPEAN PATENT APPLICATION

(43) Date of publication:
06.05.2026 Bulletin 2026/19

(21) Application number: 25208744.0

(22) Date of filing: 15.10.2025

(51) International Patent Classification (IPC):
B62D 15/02 (2006.01)

(52) Cooperative Patent Classification (CPC):
B62D 15/025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 28.10.2024 JP 2024189155

(71) Applicant: HONDA MOTOR CO., LTD.
Tokyo 105-8404 (JP)

(72) Inventors:
• TODA, Kosuke
  Saitama, 351-0193 (JP)
• GOTO, Takeru
  Saitama, 351-0193 (JP)

(74) Representative: Kiwit, Benedikt
Mitscherlich PartmbB
Karlstraße 7
80333 München (DE)

(54) **VEHICLE CONTROL DEVICE, VEHICLE CONTROL METHOD, AND STORAGE MEDIUM**

(57) A vehicle control device is a vehicle control device including a steering controller configured to control steering of a vehicle on the basis of information of a plurality of trajectory points sequentially aligned in a two-dimensional coordinate system of the vehicle configuring a target trajectory along which the vehicle will travel in a future, the steering controller includes a polynomial calculating part that derives a trajectory used for causing the vehicle to travel along the target trajectory that has been fitted to a trajectory of a two-dimensional point sequence represented by the plurality of trajectory points by calculating a polynomial, and the polynomial includes a feedback term used for deriving the trajectory through feedback control based on at least a deviation from the target trajectory.

FIG. 2

**Description**

BACKGROUND OF THE INVENTION

Field of the Invention

The present invention relates to a vehicle control device, a vehicle control method, and a storage medium.

Description of Related Art

In recent years, practical implementation of automated driving that automatically controls traveling of a vehicle has been underway. Through research and development relating to this automated driving technology, efforts are being focused on further improving traffic safety and convenience.

Conventionally, in vehicle control using automated driving, a technique relating to a vehicle control device that derives a trajectory along which a subject vehicle is traveling by performing fitting using arcs on a two-dimensional point sequence in the coordinate system of the subject vehicle that is given as a target trajectory for future traveling has been disclosed (see, for example, Japanese Unexamined Patent Application, First Publication No. 2022-108833). In this conventional technology, a starting point and an ending point of the two-dimensional point sequence to be referred to for deriving a trajectory are updated using an error between the arc and the trajectory as a reference.

SUMMARY OF THE INVENTION

Meanwhile, control of steering in a vehicle during automated driving, that is, fitting to a target trajectory along which the vehicle travels has a significant influence on ride comfort of the vehicle. For this reason, in the automated driving technology, it is more preferable to minimize the deviation of steering (a steering angle), that is, the vibration of the steering. However, in order to improve ride comfort of a vehicle by suppressing steering vibrations, precise control is necessary in the target trajectory fitting process. In fitting using arcs as in the conventional technology, there is a problem that the process for improving ride comfort of a vehicle becomes a factor causing an increase in the amount of calculation (the calculation cost becomes high), that is, a factor causing an increase in the processing load relating to automated driving. Furthermore, the increase in the processing load of fitting to a target trajectory is assumed to also affect the original steering control in automated driving.

An aspect of the present invention provides a vehicle control device, a vehicle control method, and a storage medium capable of performing appropriate steering angle control suppressing vibrations of steering by using the fitting process with respect to a target trajectory. An aspect of the present invention improves ride comfort of a vehicle and thus provides more appropriate steering control and contributes to the development of sustainable transportation systems.

A vehicle control device, a vehicle control method, and a storage medium according to the present invention employ the following configurations.

(1) A vehicle control device according to one aspect of the present invention is a vehicle control device including a steering controller configured to control steering of a vehicle on the basis of information of a plurality of trajectory points sequentially aligned in a two-dimensional coordinate system of the vehicle configuring a target trajectory along which the vehicle will travel in a future, in which the steering controller includes a polynomial calculating part that derives a trajectory used for causing the vehicle to travel along the target trajectory that has been fitted to a trajectory of a two-dimensional point sequence represented by the plurality of trajectory points by calculating a polynomial, and the polynomial includes a feedback term used for deriving the trajectory through feedback control based on at least a deviation from the target trajectory.

(2): In the aspect (1) described above, the feedback term includes a term of a quadratic function representing a curvature of the target trajectory.

(3): In the aspect (1) or (2) described above, the feedback term further includes a term of a cubic or higher-order function representing the curvature of the target trajectory.

(4): In any one of the aspects (1) to (3) described above, the polynomial further includes a feedforward term used for deriving the trajectory through feedforward control.

(5): In any one of the aspects (1) to (4) described above, the polynomial includes a steering angle velocity suppression term used for deriving the trajectory by performing steering angle velocity suppression control suppressing a velocity of the vehicle at a time of traveling in the future in accordance with a steering angle at a time of previously performing control of the steering and a target speed represented by the target trajectory.

(6): In any one of the aspects (1) to (5) described above, the polynomial includes a steering angle acceleration suppression term used for deriving the trajectory by performing steering angle acceleration suppression control suppressing an acceleration of the vehicle at the time of traveling in the future in accordance with a steering angle at the time of previously performing control of the steering and a target acceleration represented by the target trajectory.

(7): In any one of the aspects (1) to (6) described above, the polynomial further includes a regularization term suppressing a term of a cubic or higher-order function of feedback control for the derived trajectory through regularization control.

(8) A vehicle control method according to one aspect of the present invention is a vehicle control method using a computer of a vehicle control device controlling steering of a vehicle on the basis of information of a plurality of trajectory points sequentially aligned in a two-dimensional coordinate system of the vehicle configuring a target trajectory along which the vehicle will travel in a future, the vehicle control method including: deriving a trajectory used for causing the vehicle to travel along the target trajectory that has been fitted to a trajectory of a two-dimensional point sequence represented by the plurality of trajectory points by calculating a polynomial, in which the polynomial includes a feedback term used for deriving the trajectory through feedback control based on at least a deviation from the target trajectory.

(9): A storage medium according to one aspect of the present invention is a computer-readable non-transitory storage medium storing a program therein, the program causing a computer of a vehicle control device controlling steering of a vehicle on the basis of information of a plurality of trajectory points sequentially aligned in a two-dimensional coordinate system of a vehicle configuring a target trajectory along which the vehicle will travel in the future to: derive a trajectory used for causing the vehicle to travel along the target trajectory that has been fitted to a trajectory of a two-dimensional point sequence represented by the plurality of trajectory points by calculating a polynomial, in which the polynomial includes a feedback term used for deriving the trajectory through feedback control based on at least a deviation from the target trajectory.

According to the aspects (1) to (9) described above, preferable steering angle control suppressing vibrations of steering can be performed by using the fitting process with respect to a target trajectory.

BRIEF DESCRIPTION OF THE DRAWINGS

FIG. 1 is a configuration diagram of a vehicle system using a vehicle control device according to an embodiment.
FIG. 2 is a functional configuration diagram of a first controller and a second controller.
FIG. 3 is a diagram illustrating one example of fitting for a target trajectory.
FIG. 4 is a diagram illustrating another example of fitting for a target trajectory.
FIG. 5 is a diagram illustrating an example of a scene in which fitting is performed to a target trajectory.
FIG. 6 is a flowchart illustrating an example of the flow of a fitting process for a target trajectory, which is executed by a steering controller.

DETAILED DESCRIPTION OF THE INVENTION

Hereinafter, a vehicle control device, a vehicle control method, and a program according to an embodiment of the present invention will be described with reference to the drawings.

[Entire configuration]

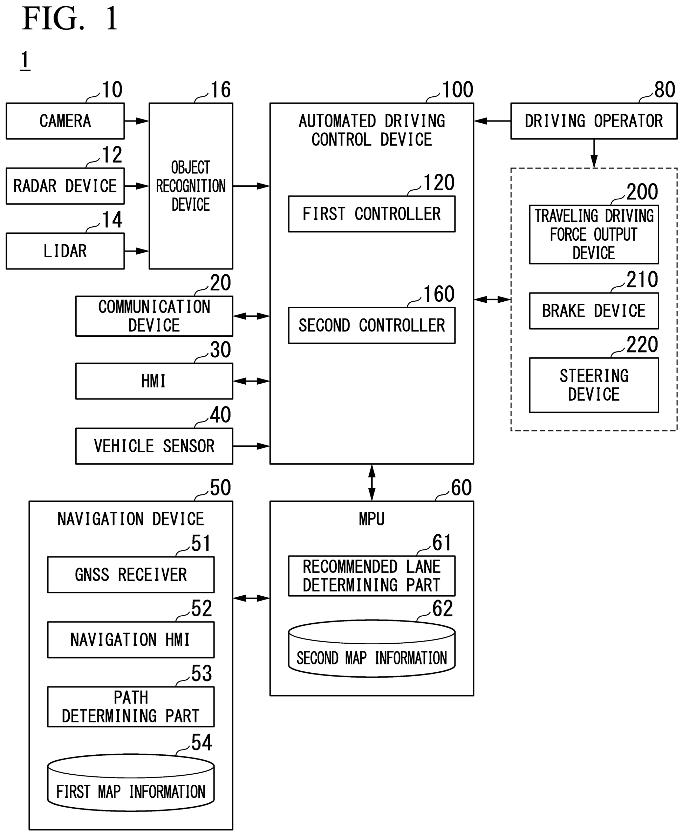

FIG. 1 is a configuration diagram of a vehicle system 1 using a vehicle control device according to an embodiment. A vehicle in which the vehicle system 1 is mounted is, for example, a vehicle having two wheels, three wheels, four wheels, or the like, and a driving source thereof is an internal combustion engine such as a diesel engine or a gasoline engine, an electric motor, or a combination thereof. The electric motor operates using power generated using a power generator connected to an internal combustion engine or discharge power of a secondary cell or a fuel cell.

For example, the vehicle system 1 includes a camera 10, a radar device 12, a light detection and ranging (LIDAR) 14, an object recognition device 16, a communication device 20, a human machine interface (HMI) 30, a vehicle sensor 40, a navigation device 50, a map positioning unit (MPU) 60, a driving operator 80, an automated driving control device 100, a traveling driving force output device 200, a brake device 210, and a steering device 220. Such devices and units are mutually connected using a multiplexing communication line such as a controller area network (CAN) communication line, a serial communication line, a radio communication network, or the like. The configuration illustrated in FIG. 1 is merely an example, and a part of the configuration may be omitted, and an additional configuration may be further added.

The camera 10, for example, is a digital camera using a solid-state imaging element such as a charge coupled device (CCD) or a complementary metal oxide semiconductor (CMOS). The camera 10 is installed at an arbitrary place in a vehicle (hereinafter, a subject vehicle M) in which the vehicle system 1 mounted. In a case in which a side in front is to be imaged, the camera 10 is attached to an upper part of a front windshield, a rear face of a room mirror, or the like. The camera 10, for example, periodically images the vicinity of the subject vehicle M repeatedly. The camera 10 may be a stereo camera.

The radar device 12 emits radio waves such as millimeter waves to the vicinity of the subject vehicle M and detects at least a position of (a distance and an azimuth) a target object by detecting radio waves (reflected waves) reflected by the target object. The radar device 12 is installed at an arbitrary place on the subject vehicle M. The radar device 12 may detect a position and a speed of an object using a frequency modulated continuous wave (FM-CW) system.

The LIDAR 14 emits light (or a radiowave having a wavelength close to light) to the vicinity of the subject vehicle M and measures scattered light. The LIDAR 14 detects a distance to a target on the basis of a time from light emission to light reception. For example, the emitted light is pulse-shaped laser light. The LIDAR 14 is attached to an arbitrary place in the subject vehicle M.

The object recognition device 16 performs a sensor fusion process for detection results acquired using some or all of the camera 10, the radar device 12, and the LIDARs 14, thereby recognizing a position, a type, a speed, and the like of an object. The object recognition device 16 outputs results of the recognition to the automated driving control device 100. The object recognition device 16 may directly output detection results acquired by the camera 10, the radar device 12, and the LIDAR 14 to the automated driving control device 100. The object recognition device 16 may be omitted from the vehicle system 1.

The communication device 20, for example, communicates with other vehicles present in the vicinity of the subject vehicle M using a cellular network, a Wi-Fi network, Bluetooth (registered trademark), dedicated short range communication (DSRC), or the like or communicates with various server apparatuses through a radio base station.

The HMI 30 presents various types of information to an occupant of the subject vehicle M and receives an input operation performed by a vehicle occupant. The HMI 30 includes various display devices, a speaker, a buzzer, a touch panel, switches, keys, and the like.

The vehicle sensor 40 includes a vehicle speed sensor that detects a speed of the subject vehicle M, an acceleration sensor that detects an acceleration, a yaw rate sensor that detects an angular velocity around a vertical axis, an azimuth sensor that detects the azimuth of the subject vehicle M, and the like.

The navigation device 50, for example, includes a global navigation satellite system (GNSS) receiver 51, a navigation HMI 52, and a path determining part 53. The navigation device 50 stores first map information 54 in a storage device such as an HDD or a flash memory. The GNSS receiver 51 identifies a position of the subject vehicle M on the basis of signals received from GNSS satellites. The position of the subject vehicle M may be identified or complemented using an inertial navigation system (INS) that uses the output of the vehicle sensor 40. The navigation HMI 52 includes a display device, a speaker, a touch panel, a key, and the like. The navigation HMI 52 may be configured to be partially or entirely common as the HMI 30 described above. The path determining part 53, for example, determines a path from a position of the subject vehicle M identified by the GNSS receiver 51 (or an input arbitrary position) to a destination input by a vehicle occupant using the navigation HMI 52 (hereinafter referred to as a path on a map) by referring to the first map information 54. The first map information 54, for example, is information in which a road form is represented using respective links representing roads and respective nodes connected using the links. The first map information 54 may include a curvature of each road, point of interest (POI) information, and the like. The path on the map is output to the MPU 60. The navigation device 50 may perform path guide using the navigation HMI 52 on the basis of the path on the map. The navigation device 50, for example, may be realized using a function of a terminal device such as a smartphone, a tablet terminal, or the like held by the vehicle occupant. The navigation device 50 may transmit a current position and a destination to a navigation server through the communication device 20 and acquire a path equivalent to the path on the map from the navigation server.

The MPU 60, for example, includes a recommended lane determining part 61 and stores second map information 62 in a storage device such as an HDD or a flash memory. The recommended lane determining part 61 divides the path on the map provided from the navigation device 50 into a plurality of blocks (for example, divides the route into blocks of 100 [m] in the advancement direction of the vehicle) and determines a recommended lane for each block by referring to the second map information 62. The recommended lane determining part 61 determines in which of lanes numbered from the left side to travel. In a case in which there is a branching place in the path on the map, the recommended lane determining part 61 determines a recommended lane such that the subject vehicle M can travel along a reasonable path for advancement to a branching destination.

The second map information 62 is map information having higher accuracy than the first map information 54. The second map information 62, for example, includes information on the centers of respective lanes or information on boundaries between lanes and the like. In addition, in the second map information 62, road information, traffic regulation information, address information (addresses and postal codes), facility information, telephone number information, and the like may be included. The second map information 62 may be updated as needed by the communication device 20 communicating with another device.

The driving operator 80, for example, includes an acceleration pedal, a brake pedal, a shift lever, a steering wheel, and other operators. The steering wheel does not necessarily need to be in a circular form and may be in the form of a variant steering wheel, a joystick, a button, or the like. A sensor detecting the amount of an operation or the presence/absence of an operation is installed in the driving operator 80, and a result of detection thereof is output to the automated driving control device 100 or some of all of the traveling driving force output device 200, the brake device 210, and the steering device 220.

The automated driving control device 100, for example, includes a first controller 120 and a second controller 160. Each of the first controller 120 and the second controller 160, for example, is realized by a hardware processor such as a central processing unit (CPU) executing a program (software). Some or all of such constituent elements may be realized by hardware (a circuit unit; includes circuitry) such as a large scale integration (LSI), a system on chip (SOC), an application specific integrated circuit (ASIC), a programmable logic device (for example, a simple programmable logic device: SPLD), a complex programmable logic device (CPLD), a field programmable gate array (FPGA), or a graphics processing unit (GPU) or may be realized by software and hardware in cooperation. The program may be stored in a storage device (a storage device including a non-transitory storage medium) such as an HDD, a flash memory, or the like of the automated driving control device 100 in advance or may be stored in a storage medium such as a DVD or a CD-ROM that can be loaded or unloaded and installed in the HDD or the flash memory of the automated driving control device 100 by loading the storage medium (a non-transitory storage medium) into a drive device. The automated driving control device 100 is one example of a "vehicle control device".

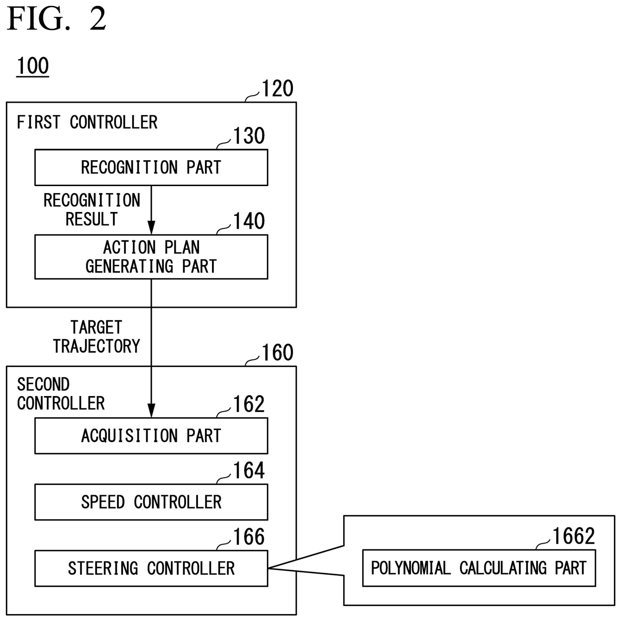

FIG. 2 is a functional configuration diagram of the first controller 120 and the second controller 160. The first controller 120, for example, includes a recognition part 130, and an action plan generating part 140.

The first controller 120, for example, simultaneously realizes functions using artificial intelligence (AI) and functions using a model provided in advance. For example, in the first controller 120, a function of "recognizing an intersection" can be realized by executing recognition of an intersection using deep learning or the like and recognition based on conditions given in advance (there are a signal, a road marking, and the like that can be used for pattern matching) at the same time and comprehensively evaluating both recognitions by assigning scores to them. Accordingly, the reliability of automated driving is secured.

The recognition part 130 recognizes states such as positions, speeds, and accelerations of objects present in the vicinity of the subject vehicle M on the basis of information input from the camera 10, the radar device 12, and the LIDAR 14 through the object recognition device 16. A position of an object, for example, is recognized as a position on absolute coordinates using a representative point (a center, a drive axis center, or the like) of the subject vehicle M as its origin and is used for control. The position of the object may be represented as a representative point such as a center, a corner, or the like of the object or may be represented in an expressed area. A "state" of an object may include an acceleration and a jerk or a "behavior state" of the object (for example, whether or not the object is changing lanes or is about to change lanes).

For example, the recognition part 130 recognizes a lane in which the subject vehicle M is traveling (traveling lane). For example, the recognition part 130 recognizes a traveling lane by comparing a pattern of road partition lines (for example, an arrangement of solid lines and broken lines) acquired from the second map information 62 with a pattern of road partition lines in the vicinity of the subject vehicle M recognized from an image captured by the camera 10. The recognition part 130 may recognize a traveling lane by recognizing traveling road boundaries (road boundaries) including road partition lines, road shoulders, curbstones, a median strip, guard rails, and the like instead of road partition lines. In this recognition, the location of the subject vehicle M acquired from the navigation device 50 or a processing result acquired by the INS may be taken into account as well. The recognition part 130 recognizes a temporary stop line, an obstacle, a red signal, a toll gate, and other road events.

When recognizing a traveling lane, the recognition part 130 recognizes a position and a posture of the subject vehicle M with respect to the traveling lane. The recognition part 130, for example, can recognize a deviation of a reference point of the subject vehicle M from the center of the lane and an angle formed with respect to a line in which the center of the lane in the advancement direction of the subject vehicle M is aligned as a relative position and a posture of the subject vehicle M with respect to the traveling lane. Instead of this, the recognition part 130 can recognize the position of the reference point of the subject vehicle M with respect to one side end part (a road partition line or a road boundary) of the traveling lane or the like as a relative position of the subject vehicle M with respect to the traveling lane.

The action plan generating part 140 basically travels in a recommended lane determined by the recommended lane determining part 61 and generates a target trajectory along which the subject vehicle M will automatedly travel (travel without being dependent on a driver's operation) in the future such that it will be possible to respond to a surrounding status of the subject vehicle M. The target trajectory, for example, includes a speed element. For example, the target trajectory is represented as a trajectory of a two-dimensional point sequence (trajectory point sequence) in which places (trajectory points), at which the subject vehicle M should arrive, are sequentially aligned in a two-dimensional coordinate system (hereinafter, referred to as a "subject vehicle coordinate system") having the traveling direction of the subject vehicle M as the x axis and the vehicle width direction of the subject vehicle M as the y axis. The origin of the subject vehicle coordinate system, for example, is a representative point of the subject vehicle M such as the center of gravity or a driving shaft center (for example, a rear wheel shaft center) of the subject vehicle M. A trajectory point is a place at which the subject vehicle M should arrive at respective predetermined traveling distances (for example, about every several [m]) as distances along the road, and separately from that, a target speed and a target acceleration for each of predetermined sampling times (for example, a fraction of a [sec]) are generated as a part of the target trajectory.

A trajectory point may be a position at which the subject vehicle M will arrive at a sampling time for every predetermined sampling time. In such a case, information of a target speed and a target acceleration is represented at the interval of trajectory points.

In generating a target trajectory, the action plan generating part 140 may set events of automated driving. As events of automated driving, there are a constant-speed traveling event, a low-speed following traveling event, a lane change event, a branching event, a merging event, a take-over event, and the like. The action plan generating part 140 generates a target trajectory according to the operated events.

The second controller 160 performs control of the traveling driving force output device 200, the brake device 210, and the steering device 220 such that the subject vehicle M passes through the target trajectory generated by the action plan generating part 140 at a scheduled time.

The second controller 160, for example, includes an acquisition part 162, a speed controller 164, and a steering controller 166.

The acquisition part 162 acquires information of a target trajectory (trajectory points) generated by the action plan generating part 140 and stores the acquired target trajectory in a memory (not illustrated).

The speed controller 164 controls the traveling driving force output device 200 or the brake device 210 on the basis of speed elements accompanying the target trajectory stored in the memory. The process of the speed controller 164, for example, is realized by a combination of feedforward control and feedback control. For example, the speed controller 164 executes feedforward control according to the target speed and the target acceleration and feedback control based on deviations from the target speed and the target acceleration in combination.

The steering controller 166 controls the steering device 220 in accordance with a bending degree of the target trajectory stored in the memory. The process of the steering controller 166, for example, is realized by acquiring a steering angle used for controlling the steering device 220, for example, by calculating a trajectory (including the curvature of the trajectory) along which the subject vehicle M is caused to travel along a target trajectory by using a polynomial including at least feedback control and inputting the curvature of the calculated trajectory to table information (curvaturesteering angle table information) representing a relation between the curvature and the steering angle stored in a memory (not illustrated) in advance. The steering controller 166 includes a polynomial calculating part 1662 as a constituent element used for calculating a trajectory along the target trajectory, that is, a trajectory fitted to the target trajectory.

The polynomial calculating part 1662 executes the calculation of a polynomial used for reproducing a trajectory represented by a plurality of trajectory points that constitute the target trajectory, that is, a two-dimensional point sequence (trajectory point sequence) of the subject vehicle coordinate system. In other words, the polynomial calculating part 1662 performs fitting using a polynomial on the trajectory of the trajectory point sequence (the target trajectory). The polynomial used by the polynomial calculating part 1662 for fitting to the target trajectory is not limited to the feedback control described above. In addition to feedback control, the polynomial calculating part 1662 can also execute the control used for preventing deterioration of the ride comfort of the subject vehicle M. Examples of the control used for preventing deterioration of ride comfort of the subject vehicle M include one or more of feedforward control, steering angle velocity suppression control, steering angle acceleration suppression control, and regularization control. Details relating to the calculation of a polynomial in the polynomial calculating part 1662 will be described below.

Referring back to FIG. 1, the traveling driving force output device 200 outputs a traveling driving force (torque) for enabling the vehicle to travel to driving wheels. The traveling driving force output device 200, for example, includes a combination of an internal combustion engine, an electric motor, and a transmission, and an electronic control unit (ECU) controlling these. The ECU controls the components described above in accordance with information input from the second controller 160 or information input from the driving operator 80.

The brake device 210, for example, includes a brake caliper, a cylinder that delivers hydraulic pressure to the brake caliper, an electric motor that generates hydraulic pressure in the cylinder, and a brake ECU. The brake ECU performs control of the electric motor in accordance with information input from the second controller 160 or information input from the driving operator 80 such that a brake torque according to a brake operation is output to each vehicle wheel. The brake device 210 may include a mechanism delivering hydraulic pressure generated in accordance with an operation on the brake pedal included in the driving operators 80 to the cylinder through a master cylinder as a backup. The brake device 210 is not limited to the configuration described above and may be an electronically-controlled hydraulic brake device that delivers hydraulic pressure in the master cylinder to a cylinder by controlling an actuator in accordance with information input from the second controller 160.

The steering device 220, for example, includes a steering ECU and an electric motor. The electric motor, for example, changes the direction of the steering wheel by applying a force to a rack and pinion mechanism. The steering ECU changes the direction of the steering wheel by driving an electric motor in accordance with information input from the second controller 160 or information input from the driving operator 80.

[Polynomial]

Hereinafter, the polynomial used when the polynomial calculating part 1662 calculates (derives) a trajectory which has been fitted for causing the subject vehicle M to travel along the target trajectory is described.
The polynomial calculating part 1662 derives partial regression coefficients of a regression equation as represented in the following Equation (1), which can be solved using the least squares method, as a trajectory fitted to the target trajectory. The following Equation (1) represents a polynomial that combines feedback control, feedforward control, steering angle velocity suppression control, steering angle acceleration suppression control, and regularization control.

$$R = \frac{1}{N}\sum_{i=1}^{N}\left(A\left(y_i - f\left(x_i\right)\right)^2 + B\left(y'_i - f'\left(x_i\right)\right)^2 + C\left(y''_i - f''\left(x_i\right)\right)^2\right)$$

$$+ \frac{D}{\Delta t}\left(\kappa_t - \kappa_{t-1}\right)^2$$

$$+ \frac{E}{\Delta t^2}\left(\left(\kappa_t - \kappa_{t-1}\right) - \left(\kappa_{t-1} - \kappa_{t-2}\right)\right)^2$$

$$+ F\sum_{j=3}^{d}c_j^2$$

$$\cdots (1)$$

In Equation (1) presented above, N represents a point sequence of a trajectory to be referred to (a point sequence of trajectory points), $\Delta t$ represents a sampling time, $\kappa$ represents a curvature to be derived, d represents a maximum degree of the polynomial, and c represents coefficients of a multidimensional polynomial. In a case in which the curvature $\kappa$ is a quadratic function as represented in the following Equation (2), it is 2a.

$$y = ax^2 \qquad \cdots (2)$$

In Equation (1) represented above, the following Equation (3) of the first term of the left side is a feedback term. In the feedback term, A is a weighting factor of the feedback control. The polynomial calculating part 1662 performs feedback control based on a deviation from the target trajectory using the feedback term.

$$A\left(y_i - f\left(x_i\right)\right)^2 \qquad \cdots (3)$$

In Equation (1) represented above and Equation (3) represented above, the function $f(x_i)$ can be expressed as represented in the following Equation (4). For example, in a case in which the maximum degree d of the polynomial is d = 4, the function $f(x_i)$ becomes the following Equation (5).

$$f\left(x_i\right) = \frac{\kappa_t}{2}x_i^2 + \sum_{j=3}^{d}\left(c_j x_i^j\right) \qquad \cdots (4)$$

$$f\left(x_i\right) = \frac{\kappa_t}{2} x_i^2 + c_3 x_i^3 + c_4 x_i^4 \qquad \cdots (5)$$

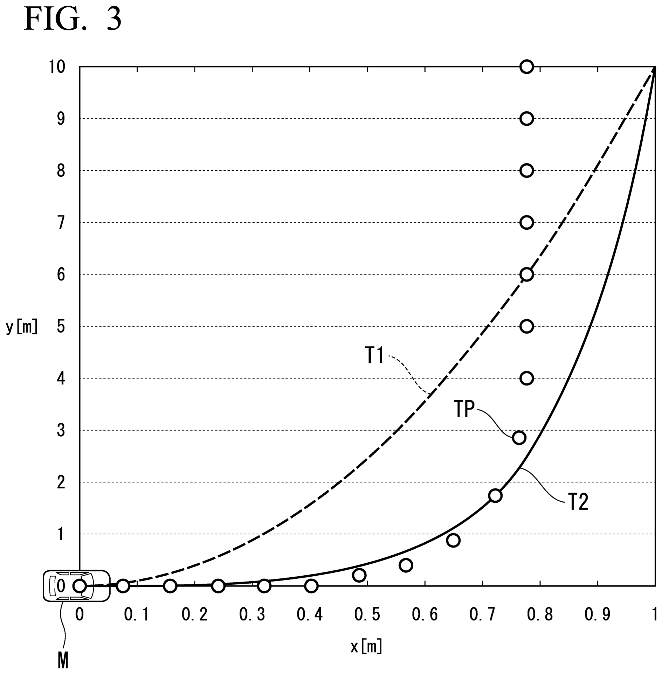

The polynomial calculating part 1662 derives a trajectory fitted to the target trajectory by calculating at least the feedback term included in the polynomial represented in Equation (1) represented above. Here, an example of fitting to the target trajectory using the polynomial calculating part 1662 is described. FIG. 3 is a diagram showing an example of fitting for the target trajectory by the polynomial calculating part 1662. The example illustrated in FIG. 3 is an example of a case in which the subject vehicle M makes a left turn at an intersection.

In a case in which the subject vehicle M makes a left turn at an intersection, the action plan generating part 140, as illustrated in FIG. 3, generates a target trajectory that becomes a trajectory of a two-dimensional point sequence (a trajectory point sequence) including straight lines and curves in which a plurality of trajectory points TP are aligned in order. In this case, in a conventional fitting process, rather than sequentially following the trajectory of a trajectory point sequence, for example, a trajectory such as the trajectory T1, that is, a trajectory along which the subject vehicle M travels through an intersection in a short cut is assumed to be derived. The trajectory T1 is a trajectory derived using calculation of the following Equation (6) as an example of a conventional fitting process. In contrast to this, the polynomial calculating part 1662 derives a trajectory such as the trajectory T2 that is fitted to the target trajectory by calculating the feedback term represented in Equation (3) presented above. The trajectory T2 is a trajectory that is derived through calculation of the following Equation (7) as an example of the fitting process in the polynomial calculating part 1662. In this way, the polynomial calculating part 1662 can derive a trajectory fitted to the target trajectory with improved followability with respect to the target trajectory by calculating feedback terms to which terms are added. However, the curvature around the origin of the subject vehicle coordinate system of the subject vehicle M is primarily governed by a term of a quadratic function. Thus, in the polynomial represented in Equation (1) presented above, by adding a regularization term for performing regularization control, the influence of terms of cubic and higher-order functions is suppressed. The regularization term will be described below.

$$y = 10x^2 \qquad \cdots (6)$$

$$y = x^2 + 2x^4 + 3x^6 + 4x^8 \qquad \cdots (7)$$

In Equation (1) presented above, the following Equation (8) of the first term of the left side is a feedforward term. In the feedforward term, B and C are weighting factors for the feedforward control. The polynomial calculating part 1662 performs feedforward control according to the degree of bending (curvature) of the road ahead of the subject vehicle M, which is represented by the target trajectory, by using the feedforward term. Through the feedforward control, the polynomial calculating part 1662 can derive a trajectory improving the ride comfort of the subject vehicle M by taking the curvature represented by the target trajectory into account.

$$B\left(y'_i - f'\left(x_i\right)\right)^2 + C\left(y''_i - f''\left(x_i\right)\right)^2 \qquad \cdots (8)$$

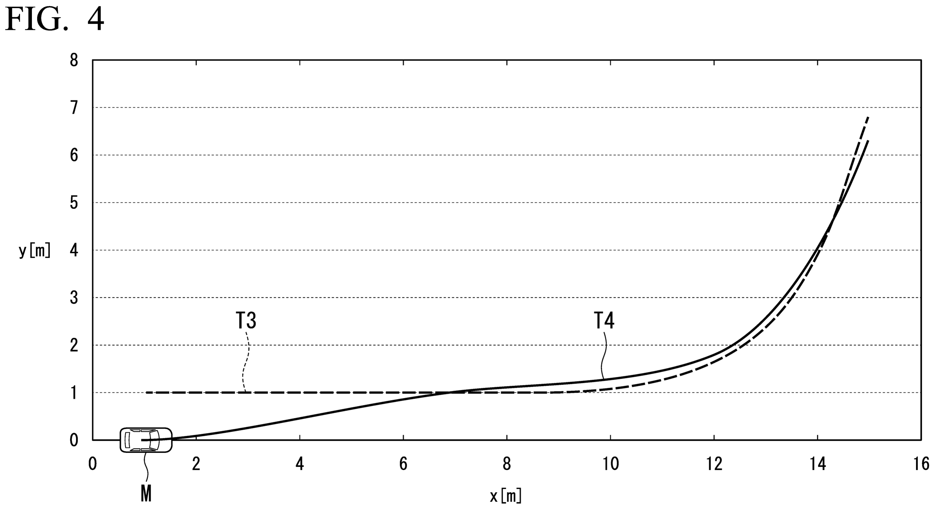

By calculating the feedforward term included in the polynomial represented in Equation (1) presented above, the polynomial calculating part 1662 derives a trajectory fitted to the target trajectory with further improved followability by taking the curvature represented by the target trajectory into account. Here, another example of fitting to the target trajectory using the polynomial calculating part 1662 is described. FIG. 4 is a diagram illustrating another example of fitting to the target trajectory using the polynomial calculating part 1662. The example illustrated in FIG. 4 illustrates an example of a case in which the subject vehicle M makes a left turn at an intersection located further ahead than that of the example illustrated in FIG. 3. FIG. 4 illustrates an example of a case in which a trajectory T4, which is derived by calculating the feedforward term, is fitted to a trajectory T3 of a two-dimensional point sequence (trajectory point sequence) of the target trajectory in which a plurality of trajectory points TP are aligned in order. In this case, the curvature $\kappa$ in the function $f(x_i)$ represented in Equation (4) presented above can be defined as in the following Equation (9).

$$\kappa = \frac{f''(x)}{\left(1 + f'(x)^2\right)^{\frac{3}{2}}} \qquad \cdots (9)$$

However, when the curvature $\kappa$ represented in Equation (9) presented above is directly applied to the feedforward term, it becomes difficult to solve the polynomial using the least squares method. For this reason, in the feedforward terms represented in Equation (1) presented above and Equation (8) presented above, by calculating the first derivative function $f'(x_i)$ and the second derivative function $f''(x_i)$ of the function $f(x_i)$, the curvature of the road ahead of the subject vehicle M that is represented by the target trajectory is indirectly taken into account. Then, a difference between the curvature represented by the target trajectory and the curvature calculated in the feedforward term is minimized. This corresponds to minimizing each of the first term and the second term of Equation (8) presented above as represented in the following Equations (10) and (11).

$$y'_i - f'(x_i) \qquad \cdots (10)$$

$$y''_i - f''(x_i) \qquad \cdots (11)$$

In this way, the polynomial calculating part 1662, as in the example in FIG. 4, derives a trajectory such as the trajectory T4 fitted to the target trajectory T3 of the target trajectory. In accordance with this, by calculating the feedforward term, the polynomial calculating part 1662 can derive a fitted trajectory with improved followability with respect to the target trajectory by taking the curvature represented by the target trajectory into account.

In Equation (1) presented above, the second term on the left side (the following Equation (12)) is a steering angle velocity suppression term. In the steering angle velocity suppression term, D is a weighting factor for steering angle velocity suppression control. The polynomial calculating part 1662 performs steering angle velocity suppression control for suppressing the speed using the steering angle velocity suppression term in accordance with a previous (for example, two sampling intervals ago and one sampling interval ago) steering angle (curvature), and target speed. Through the steering angle velocity suppression control, the polynomial calculating part 1662, for example, can suppress sudden steering actions (suppress a change (for example, a rise) in the speed causing a sudden steering action) and derive a trajectory that improves the ride comfort of the subject vehicle M.

$$\frac{D}{\Delta t}\left(\kappa_t - \kappa_{t-1}\right)^2 \qquad \cdots (12)$$

In Equation (1) presented above, the third term on the left side (the following Equation (13)) is a steering angle acceleration suppression term. In the steering angle acceleration suppression term, E is a weighting factor for steering angle acceleration suppression control. The polynomial calculating part 1662 performs steering angle acceleration suppression control for suppressing the acceleration in accordance with a previous (for example, two sampling intervals ago and one sampling interval ago) steering angle (curvature), and a target speed using the steering angle acceleration suppression term. Through the steering angle acceleration suppression control, the polynomial calculating part 1662, for example, can suppress a sudden steering action (suppress a change (for example, an increase) in the acceleration causing a sudden steering action) and derive a trajectory that improves the ride comfort of the subject vehicle M.

$$\frac{E}{\Delta t^2}\left(\left(\kappa_t - \kappa_{t-1}\right) - \left(\kappa_{t-1} - \kappa_{t-2}\right)\right)^2 \qquad \cdots (13)$$

In Equation (1) presented above, the fourth term on the left side (the following Equation (14)) is a regularization term. In the regularization term, F is a weighting factor for regularization control that is arbitrarily given. Equation (1) presented above and the following Equation (14) represent examples of a case in which employing a control causing a weighting factor of data of a trend different from that of other data to approach "0" by adding a square sum of the weighting factor to the L2 regularization term, that is, an objective variable, as a regularization term, and causing fitting of a trajectory with respect to the target trajectory to become smooth.

$$F \sum_{j=3}^{d} c_j^2 \qquad \cdots (1\,4)$$

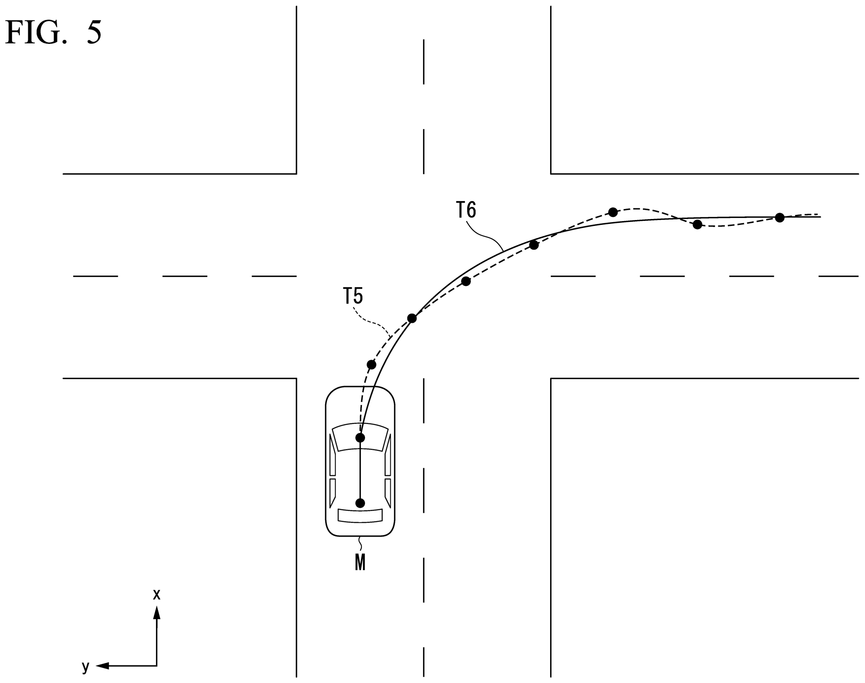

The polynomial calculating part 1662 improves the followability to the target trajectory as described above by calculating the regularization term included in the polynomial represented in Equation (1) presented above and derives a trajectory fitted with the influence of terms of cubic or higher-order functions in the function $f(x_i)$ being suppressed. Here, an example of fitting to the target trajectory using the polynomial calculating part 1662 is described. FIG. 5 is a diagram illustrating an example of a view in which fitting to the target trajectory is performed by the polynomial calculating part 1662. FIG. 5 illustrates an example of a view in which, in a case in which the subject vehicle M makes a right turn at an intersection, it is fitted to the target trajectory.

In a case in which the subject vehicle M makes a right turn at an intersection, the action plan generating part 140 generates a target trajectory that becomes a trajectory of a two-dimensional point sequence (trajectory point sequence) in which a plurality of trajectory points TP are aligned in order as illustrated in FIG. 5. Here, it is assumed that the trajectory points TP of the target trajectory generated by the action plan generating part 140 have deviations in the x-axis direction and/or the y-axis direction of the subject vehicle coordinate system. In this case, if the polynomial calculating part 1662 derives a trajectory T5 such that it sequentially follows the trajectory of the trajectory point sequence of trajectory points TP for improving the followability to the target trajectory, fluctuations in traveling of the subject vehicle M, that is, fluctuations in the behavior of steering occur. Thus, the polynomial calculating part 1662 derives a trajectory such as a trajectory T6 that is smoothly fitted with respect to the target trajectory by calculating the regularization terms represented in Equation (1) and Equation (14) presented above. In accordance with this, the polynomial calculating part 1662 can derive a trajectory that improves the followability to the target trajectory and improves the ride comfort of the subject vehicle M suppressing fluctuations (steering vibrations) in the steering behavior during traveling.

In this way, the polynomial calculating part 1662 can derive a trajectory that achieves both improved followability with respect to the target trajectory and enhanced ride comfort of the subject vehicle M by calculating the polynomial shown in equation (1). Moreover, since the polynomial represented in Equation (1) presented above is an equation that can be solved using the least squares method, the amount of calculation becomes smaller (the calculation cost is lower) than that of a conventional fitting process using arcs. For this reason, the polynomial calculating part 1662 can derive a trajectory fitted to the target trajectory more quickly. In accordance with this, the second controller 160 can perform traveling control (steering control) of the subject vehicle M in accordance with the target trajectory generated by the action plan generating part 140.

[Example of process of fitting to target trajectory]

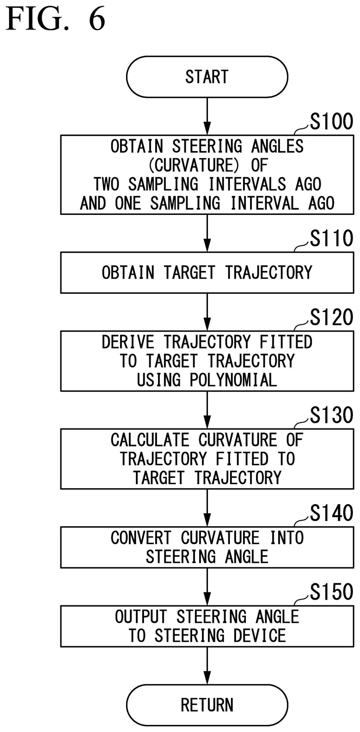

FIG. 6 is a flowchart illustrating an example of the flow of a process of fitting to a target trajectory executed by the steering controller 166. The process of this flowchart, for example, is repeatedly executed while the automated driving control device 100 is operating. In the following description, it is assumed that the action plan generating part 140 constantly generates a target trajectory (trajectory point sequence).

When the process of this flowchart starts, in the steering controller 166, firstly, the polynomial calculating part 1662 obtains steering angles (curvatures) of two sampling intervals ago and one sampling interval ago (Step S100).

The polynomial calculating part 1662 obtains a target trajectory (that is, a trajectory of a trajectory point sequence of the subject vehicle coordinate system) generated by the action plan generating part 140 (Step S110).

The polynomial calculating part 1662 calculates the polynomial represented in Equation (1) presented above on the basis of the steering angles (curvatures) of two sampling intervals ago and one sampling interval ago and the target trajectory (trajectory point sequence) that have been obtained, and calculates a trajectory fitted to the target trajectory (Step S120).

The steering controller 166 calculates the curvature of the trajectory fitted to the target trajectory that has been derived by the polynomial calculating part 1662 (Step S130).

The steering controller 166 converts the calculated curvature of the trajectory into a steering angle (Step S140).

Here, the conversion from the curvature to a steering angle in the process of Step S140 is performed by the steering controller 166, for example, inputting the calculated curvature of the trajectory to curvature-to-steering angle table information stored in a memory (not illustrated) in advance.

The steering controller 166 outputs the converted steering angle to the steering device 220 (Step S150). In accordance with this, in the steering device 220, for example, a steering ECU drives an electric motor on the basis of the steering angle output by the steering controller 166 so as to change the directions of steering wheels. Then, the steering controller 166 returns the process to Step S100.

In accordance with such a process, in the steering controller 166, the polynomial calculating part 1662 performs fitting using a polynomial on the two-dimensional point sequence (trajectory point sequence) represented by the target trajectory generated by the action plan generating part 140 so as to calculate (derive) a trajectory used for causing the subject vehicle M to travel along the target trajectory. Then, the steering controller 166 performs control of the steering device 220, that is, preferable traveling control (steering control) of the subject vehicle M in accordance with the target trajectory generated by the action plan generating part 140 on the basis of the trajectory calculated (derived) by the polynomial calculating part 1662.

As described above, according to the vehicle control device according to the embodiment, the steering controller 166 inside of the second controller 160 included in the automated driving control device 100 performs control of the steering device 220 according to the target trajectory generated by the action plan generating part 140 inside of the first controller 120. At this time, in the vehicle control device according to the embodiment, the polynomial calculating part 1662 included in the steering controller 166 calculates (derives) a trajectory fitted to the target trajectory using a polynomial used for reproducing the trajectory of the two-dimensional point sequence (trajectory point sequence) of the subject vehicle coordinate system represented by the target trajectory. Then, in the vehicle control device according to the embodiment, the steering controller 166 performs control (steering control) of the steering device 220 on the basis of the trajectory calculated (derived) by the polynomial calculating part 1662. In accordance with this, the vehicle control device according to the embodiment can perform preferable traveling control (steering control) of the subject vehicle M that improves the followability with respect to the target trajectory and improves the ride comfort by suppressing deviations (steering vibrations) of the steering behavior during traveling of the subject vehicle M.

The embodiment described above can be expressed as below.

A vehicle control device that controls steering of a vehicle on the basis of information of a plurality of trajectory points sequentially aligned in a two-dimensional coordinate system of the above-described vehicle configuring a target trajectory along which the vehicle will travel in a future includes a hardware processor and a storage device storing a program therein, and, by the hardware processor described above executing the program stored in the storage device described above, the vehicle control device is configured to derive a trajectory used for causing the vehicle described above to travel along the target trajectory described above, which has been fitted to a trajectory of a two-dimensional point sequence represented by the plurality of trajectory points described above by calculating a polynomial, in which the polynomial described above includes a feedback term used for deriving the trajectory using feedback control based on at least a deviation from the target trajectory described above.

In the embodiment, a case in which the polynomial of Equation (1) presented above for calculating (deriving) a trajectory fitted to the target trajectory by the polynomial calculating part 1662 is a polynomial combining feedback control, feedforward control, steering angle velocity suppression control, steering angle acceleration suppression control, and regularization control has been described. However, as described above, as long as the polynomial is a polynomial including at least feedback control, a trajectory fitted to the target trajectory can be calculated (derived).

In other words, in the polynomial represented in Equation (1) presented above, any one of the feedforward control, the steering angle velocity suppression control, the steering angle acceleration suppression control, and the regularization control or a plurality of controls thereof may be omitted. The configuration and the process of the vehicle control device in this case (more specifically, calculation (derivation) of a trajectory fitted to the target trajectory in the polynomial calculating part 1662) may be configured to be equivalent to the configuration and the process of the automated driving control device 100 according to the embodiment.

In the embodiment, a case in which the polynomial calculating part 1662 included in the steering controller 166 calculates (derives) a trajectory fitted to the target trajectory using a polynomial, and the steering device 220 is controlled in accordance with the target trajectory generated by the action plan generating part 140 on the basis of the calculated (derived) trajectory has been described. In other words, in the embodiment, a case in which the process of fitting using a polynomial is performed instead of the conventional process of fitting using an arc has been described. However, the fitting to the target trajectory performed when the steering device 220 is controlled by the steering controller 166 is not limited to performing the process of fitting using a polynomial represented in the embodiment in place of the conventional process of fitting using an arc. In other words, the steering controller 166 may perform the process of fitting using an arc in addition to fitting using a polynomial according to the polynomial calculating part 1662. The process of fitting using an arc in this case is similar to the conventional process of fitting using an arc, and thus detailed description thereof will be omitted.

As above, while a form used for performing the present invention has been described using the embodiment, the present invention is not limited to such an embodiment at all, and various modifications and substitutions can be made within a range not departing from the scope of the present invention.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

**Claims**

1.  A vehicle control device comprising a steering controller configured to control steering of a vehicle on the basis of information of a plurality of trajectory points sequentially aligned in a two-dimensional coordinate system of the vehicle configuring a target trajectory along which the vehicle will travel in a future,

    wherein the steering controller includes a polynomial calculating part that derives a trajectory used for causing the vehicle to travel along the target trajectory that has been fitted to a trajectory of a two-dimensional point sequence represented by the plurality of trajectory points by calculating a polynomial, and
    wherein the polynomial includes a feedback term used for deriving the trajectory through feedback control based on at least a deviation from the target trajectory.

2.  The vehicle control device according to claim 1, wherein the feedback term includes a term of a quadratic function representing a curvature of the target trajectory.

3.  The vehicle control device according to claim 1 or 2, wherein the feedback term further includes a term of a cubic or higher-order function representing the curvature of the target trajectory.

4.  The vehicle control device according to any one of claims 1 to 3, wherein the polynomial further includes a feedforward term used for deriving the trajectory through feedforward control.

5.  The vehicle control device according to any one of claims 1 to 4, wherein the polynomial includes a steering angle velocity suppression term used for deriving the trajectory by performing steering angle velocity suppression control suppressing a velocity of the vehicle at a time of traveling in the future in accordance with a steering angle at a time of previously performing control of the steering and a target speed represented by the target trajectory.

6.  The vehicle control device according to any one of claims 1 to 5, wherein the polynomial includes a steering angle acceleration suppression term used for deriving the trajectory by performing steering angle acceleration suppression control suppressing an acceleration of the vehicle at the time of traveling in the future in accordance with a steering angle at the time of previously performing control of the steering and a target acceleration represented by the target trajectory.

7.  The vehicle control device according to any one of claims 1 to 6, wherein the polynomial further includes a regularization term suppressing a term of a cubic or higher-order function of feedback control for the derived trajectory through regularization control.

8.  A vehicle control method using a computer of a vehicle control device controlling steering of a vehicle on the basis of information of a plurality of trajectory points sequentially aligned in a two-dimensional coordinate system of the vehicle configuring a target trajectory along which the vehicle will travel in a future, the vehicle control method comprising:

    deriving a trajectory used for causing the vehicle to travel along the target trajectory that has been fitted to a trajectory of a two-dimensional point sequence represented by the plurality of trajectory points by calculating a polynomial,
    wherein the polynomial includes a feedback term used for deriving the trajectory through feedback control based on at least a deviation from the target trajectory.

9.  A computer-readable non-transitory storage medium storing a program therein, the program causing a computer of a vehicle control device controlling steering of a vehicle on the basis of information of a plurality of trajectory points sequentially aligned in a two-dimensional coordinate system of a vehicle configuring a target trajectory along which the vehicle will travel in the future to:

derive a trajectory used for causing the vehicle to travel along the target trajectory that has been fitted to a trajectory of a two-dimensional point sequence represented by the plurality of trajectory points by calculating a polynomial,

wherein the polynomial includes a feedback term used for deriving the trajectory through feedback control based on at least a deviation from the target trajectory.

# FIG. 1

<u>1</u>

FIG. 2

<u>100</u>

FIG. 3

FIG. 4

EP 4 737 274 A1

FIG. 5

# FIG. 6

```
         ┌──────────────┐
         │    START     │
         └──────┬───────┘
                │              S100
   ┌────────────▼────────────────┐
   │  OBTAIN STEERING ANGLES      │
   │       (CURVATURE) OF         │
   │  TWO SAMPLING INTERVALS AGO  │
   │ AND ONE SAMPLING INTERVAL AGO│
   └────────────┬────────────────┘
                │              S110
   ┌────────────▼────────────────┐
   │   OBTAIN TARGET TRAJECTORY   │
   └────────────┬────────────────┘
                │              S120
   ┌────────────▼────────────────┐
   │   DERIVE TRAJECTORY FITTED   │
   │      TO TARGET TRAJECTORY    │
   │      USING POLYNOMIAL        │
   └────────────┬────────────────┘
                │              S130
   ┌────────────▼────────────────┐
   │    CALCULATE CURVATURE OF    │
   │     TRAJECTORY FITTED TO     │
   │       TARGET TRAJECTORY      │
   └────────────┬────────────────┘
                │              S140
   ┌────────────▼────────────────┐
   │    CONVERT CURVATURE INTO    │
   │        STEERING ANGLE        │
   └────────────┬────────────────┘
                │              S150
   ┌────────────▼────────────────┐
   │    OUTPUT STEERING ANGLE     │
   │      TO STEERING DEVICE      │
   └────────────┬────────────────┘
                │
         ┌──────▼───────┐
         │    RETURN     │
         └──────────────┘
```

Europäisches Patentamt
European Patent Office
Office européen des brevets

# EUROPEAN SEARCH REPORT

**Application Number**

EP 25 20 8744

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/275602 A1 (PEAKE JOHN W [US]) 6 November 2008 (2008-11-06) | 1,3,4,8,9 | INV. B62D15/02 |
| Y | * paragraphs [0043] - [0052], [0065]; claims; figures * | 5-7 | |
| X | CN 116 923 458 B (NINGBO JUNLIAN ZHIXING TECH CO LTD; UNIV NORTHWESTERN POLYTECHNICAL) 1 December 2023 (2023-12-01) * paragraphs [0071] - [0076]; claims; figures * | 1,2,8,9 | |
| Y | CN 112 912 293 A (MITSUBISHI ELECTRIC CORP) 4 June 2021 (2021-06-04) * paragraph [0049]; claims; figures * | 7 | |
| Y | CN 115 140 096 A (XIDIAN WUHU RES INST) 4 October 2022 (2022-10-04) * paragraphs [0014] - [0024]; claims; figures * | 5,6 | |

**TECHNICAL FIELDS SEARCHED (IPC)**

B62D

The present search report has been drawn up for all claims

| Place of search | Date of completion of the search | Examiner |
|---|---|---|
| The Hague | 12 March 2026 | Ducher, Alban |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 8744

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2026

| Patent document cited in search report | | Publication date | Patent family member(s) | | Publication date |
|---|---|---|---|---|---|
| US 2008275602 | A1 | 06-11-2008 | NONE | | |
| CN 116923458 | B | 01-12-2023 | NONE | | |
| CN 112912293 | A | 04-06-2021 | CN | 112912293 A | 04-06-2021 |
| | | | DE | 112018008111 T5 | 29-07-2021 |
| | | | JP | 6972377 B2 | 24-11-2021 |
| | | | JP | WO2020090004 A1 | 30-04-2021 |
| | | | US | 2021394755 A1 | 23-12-2021 |
| | | | WO | 2020090004 A1 | 07-05-2020 |
| CN 115140096 | A | 04-10-2022 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2022108833 A